# EUROPEAN PATENT APPLICATION

(11) **EP 4 456 284 A1**
(43) Date of publication of application: **30.10.2024**
(21) Application number: 22911140.6
(22) Date of filing: 16.12.2022
(51) Int. Cl.: H01M 50/204, H01M 50/213, H01M 50/291, H01M 50/342, H01M 50/505

(54) **BATTERY PACK**

(30) Priority: 24.12.2021 JP 2021211278
(71) Applicant: Panasonic Holdings Corporation, Osaka, 571-8501 (JP); Panasonic Energy Co., Ltd., Osaka 570-8511 (JP)
(72) Inventor: SAKAGAWA, Yasuaki, Kadoma-shi, Osaka 571-0057 (JP); SHIMIZU, Keisuke, Kadoma-shi, Osaka 571-0057 (JP); ISHIZAKA, Katsushi, Kadoma-shi, Osaka 571-0057 (JP); ARIKAWA, Hiroshi, Kadoma-shi, Osaka 571-0057 (JP); FUKUDA, Shinsuke, Kadoma-shi, Osaka 571-0057 (JP)
(74) Representative: Novagraaf International SA
(86) International application number: PCT/JP2022/046502
(87) International publication number: WO 2023/120437

(57) **Abstract**

A battery pack includes a restraining member including a side part disposed so as to surround at least a part in a height direction of a plurality of batteries arranged in alignment. The battery pack includes a partition member including a partition part that partitions two adjacent batteries, and a head part coupled to an end part in at least one side in the height direction of the partitioning part. The head part protrudes from a position of an exhaust valve of the battery in the height direction, and protrudes in the thickness direction of the partitioning part to include a part overlapping to at least one of the two batteries in the height direction.

## Description

### Technical Field

The present disclosure relates to a battery pack.

### Background Art

Conventional examples of a battery pack include a battery pack described in Patent Literature 1. The battery pack includes a partition member made of resin, and two sheet members with insulation property made of mica. The partition member is disposed between two adjacent cylindrical batteries. The partition member includes a first curved surface whose shape corresponds to a part of a side surface of a first cylindrical battery, and a second curved surface whose shape corresponds to a part of a side surface of a second cylindrical battery. A first sheet member is sandwiched between the side surface of the first cylindrical battery and the first curved surface, and a second sheet member is sandwiched between the side surface of the second cylindrical battery and the second curved surface.

In this battery pack, the partition member, which is sandwiched between the two sheet members with insulation property at both end sides, is disposed between the two adjacent cylindrical batteries. Therefore, when abnormal heating occurs in one of the cylindrical batteries, conduction of the heat generated in the cylindrical battery to the other cylindrical battery can be suppressed by two sheet members. Therefore, even if abnormal heating occurs in any one of the cylindrical batteries, the influence of the abnormal heating is not easily to reach other cylindrical batteries.

### Citation List

### Patent Literature

[PTL 1] Japanese Unexamined Patent Application, Publication No. 2012-33464

### SUMMARY OF THE INVENTION

When a distance between adjacent batteries can be shortened, a battery pack can be made more compact. In such a case, it is preferable to effectively suppress an influence of abnormal heating on other batteries because a battery pack with a high safety can be produced. Accordingly, an object of the present disclosure is to provide a battery pack that is easily made compact and easily improved in terms of safety.

In order to solve the above problems, a battery pack according to the present disclosure includes a restraining member including a side part disposed so as to surround at least a part in a height direction of a plurality of batteries arranged in alignment; and a partition member including a partitioning part for partitioning two adjacent batteries of the plurality of batteries, and a head part coupled to an end part in at least a first side in the height direction of the partitioning part, wherein the head part protrudes in the height direction from a position of an exhaust valve of one battery of the plurality of batteries, and protrudes in a thickness direction of the partitioning part to include an overlapping part in at least one of the two batteries in the height direction. Note here that the height direction may be defined as an axial direction of any one of the batteries.

According to the battery pack of the present disclosure, a distance between the adjacent batteries is easily shortened and the size can be made compact to effectively suppress affecting of the influence of abnormal heat generation of a battery, and thus safety can be easily enhanced.

### BRIEF DESCRIPTION OF THE DRAWINGS

FIG. 1 is a perspective view showing an internal structure of a battery pack in accordance with one exemplary embodiment of the present disclosure.
FIG. 2 is a schematic cross-sectional view of the battery pack.
FIG. 3 is a plan view of a first restraining member of the battery pack when viewed from the outside on one side in the height direction.
FIG. 4 is a cross-sectional view taken along line A-A of FIG. 2.
FIG. 5 is a cross-sectional view of a vicinity of a protruding terminal in the battery pack of a reference example.
FIG. 6 is a cross-sectional view of a vicinity of a protruding terminal in the battery pack of an exemplary embodiment.
FIG. 7 is a cross-sectional view of a vicinity of a protruding terminal in the battery pack of a modified example.
FIG. 8 is a cross-sectional view of a battery pack of another modified example, corresponding to FIG. 7.
FIG. 9 is a plan view of a partition member of the battery pack of the other modified example viewed from the opposite to the head part in the height direction.
FIG. 10 is a perspective view of a restraining member of a battery pack of a further modified example.
FIG. 11 is a plan view of an outer surface of a top plate part of the restraining member of the battery pack of the further modified example when viewed in the height direction.
FIG. 12 is a plan view of an internal surface of the top plate part of the battery pack of the further modified example when viewed in the height direction.
FIG. 13 is a perspective view of a partition member of a battery pack of the further modified example.

### DESCRIPTION OF EMBODIMENT

Hereinafter, exemplary embodiments according to the present disclosure are described in detail with reference to attached drawings. Note here that in the following, when a plurality of exemplary embodiment or modified examples are included, it is assumed from the beginning that the characteristic portions thereof will be appropriately combined to construct a new exemplary embodiment. Furthermore, in the following exemplary embodiments, the same reference numerals are given to the same configurations in the drawings, and redundant explanations are omitted. In addition, a plurality of drawings includes schematic diagrams, and the dimensional ratios of length, width, height, and the like, of each member do not necessarily match in different drawings. Furthermore, among the constituent elements described below, constituent elements that are not described in independent claims indicating the highest concept are optional constituent elements and are not essential constituent elements.

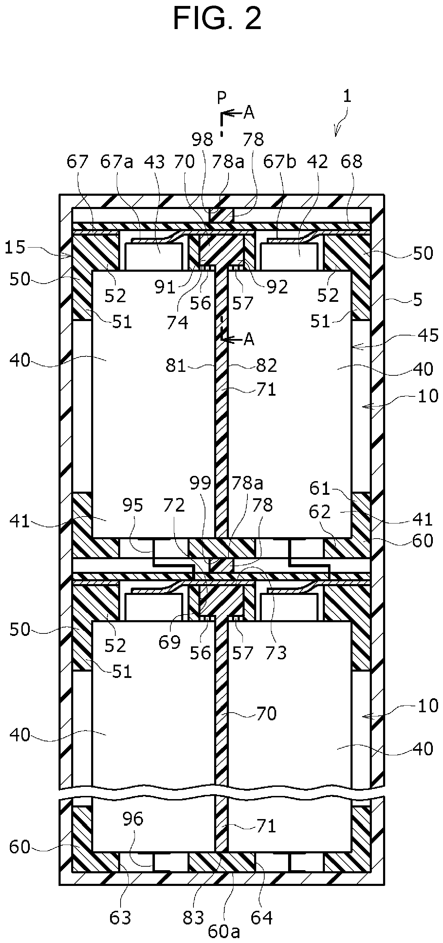

Furthermore, in the following description, the height direction is a direction parallel to the axial direction of batteries 40 partitioned by partition members 70, 170, 270, and 370, and the direction parallel to the central axis of the batteries. Furthermore, in the following, a case where each battery is cylindrical battery 40 (see FIG. 2) including bottomed cylindrical outer covering can 41 (see FIG. 2), an electrode body (not shown) disposed in outer covering can 41, and sealing body 42 (see FIG. 2) for sealing an opening of outer covering can 41 via an insulating gasket (not shown) is described. Furthermore, a case where sealing body 42 includes an exhaust valve for exhausting high temperature gas in cylindrical battery 40 when cylindrical battery 40 is broken by occurrence of abnormal heat generation is described. However, the battery may be a cylindrical battery including exhaust valves at both a sealing body and a bottom part of the outer covering can or may be a cylindrical battery including an exhaust valve only in a bottom part of an outer covering can. Alternatively, the battery may not be a cylindrical battery and may be, for example, a prismatic battery and the like.

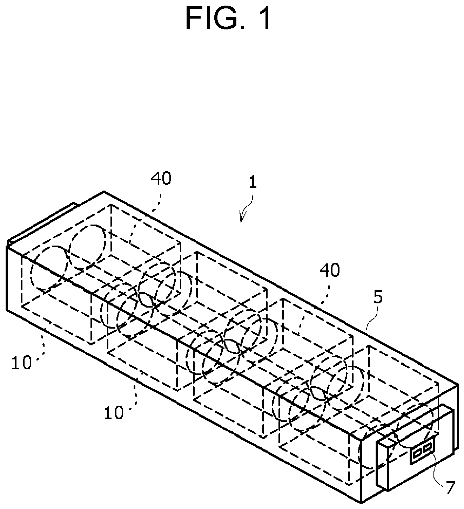

FIG. 1 is a perspective view to illustrate an internal structure of battery pack 1 in accordance with one exemplary embodiment of the present disclosure. As shown in FIG. 1, battery pack 1 includes case 5, and one or more battery blocks 10 housed in case 5. Case 5 is made of, for example, a metal material such as aluminum or a resin material. Battery block 10 includes a plurality of cylindrical batteries (hereinafter simply referred to as batteries) 40 arranged substantially parallel to each other at substantially the same position in the height direction, and the plurality of batteries 40 is electrically connected to each other. The plurality of batteries 40 may be connected in parallel and may be connected in series, or may be electrically connected in parallel and series. In this exemplary embodiment, battery block 10 includes two batteries 40 connected in parallel. Although not shown and described in detail, battery pack 1 is formed in a connection structure in which the plurality of battery blocks 10 is electrically connected.

The connection structure may include, for example, at least one of one or more wires and one or more bus bars, at least one of which may be housed in an internal chamber defined by case 5 or may be embedded in case 5 when case 5 is made of resin. Alternatively, at least one of them may include both a part housed in the internal chamber defined by case 5 and a part embedded in case 5 made of resin.

The plurality of battery blocks 10 is electrically connected in at least one of series connection and parallel connection by the connection structure. When the plurality of battery blocks 10 includes two or more battery blocks 10 connected in series, a voltage of battery pack 1 can be increased. Furthermore, when the plurality of battery blocks 10 includes two or more battery blocks 10 connected in parallel, a capacity of battery pack 1 can be increased.

Case 5 is provided with external terminals 7 that are exposed to the outside and connectable from the outside. External terminals 7 are electrically connected to the plurality of battery blocks 10 via the connection structure. External terminal 7 is used as a terminal for supplying DC voltage when battery pack 1 is loaded on mounted devices such as a power-assisted bicycle. External terminal 7 may be used to charge battery 40 possessed by battery pack 1. External terminal 7 may be provided on only one location in case 5 or in a plurality of locations in case 5.

FIG. 2 is a schematic cross-sectional view of battery pack 1. As shown in FIG. 2, in this exemplary embodiment, battery block 10 includes holder 15 that restrains two batteries 40 integrally. Holder 15 positions the relative position of second battery 40 with respect to first battery 40, and prohibits second battery 40 from relatively moving with respect to first battery 40. Each of first battery 40 and second battery 40 includes protruding terminal 43 protruding to one side in the height direction at the middle of the end surface on the one side in the height direction. Holder 15 includes first restraining member 50, second restraining member 60, and partition member 70 with a lower thermal conductivity than two restraining members 50 and 60. Each of first and second restraining members 50 and 60 is made of, for example, a high thermal conductive PPS (polyphenylene sulfide) resin, a resin containing a heat dissipation filler, or the like. Furthermore, partition member 70 can be made of, for example, an injection-moldable thermosetting resin, and more specifically, made of a phenolic resin, unsaturated polyester, unsaturated polyester mixed with a heat-absorbing agent, or the like. Alternatively, partition member 70 may be made of an inorganic mineral such as mica, or a material obtained by mixing an inorganic mineral such as mica into a resin material.

First restraining member 50 is made of an integral resin. First restraining member 50 includes annular side part 51 and covering part 52. First restraining member 50 is disposed to surround an end part at one side in the height direction at a part other than protruding terminal 43 in two batteries 40. Furthermore, covering part 52 extends in the orthogonal direction that is substantially orthogonal to the height direction, and covers a part of an end surface at one side in the height direction of battery 40. First restraining member 50 restrains a part close to a protruding terminal 43 in the height direction of battery group 45 including two batteries 40 included in battery block 10 and holds two batteries 40. Note here that battery 40 to be used in the exemplary embodiment shown in FIG. 2 is a form including protruding terminal 43, but may be a form that does not including protruding terminal 43.

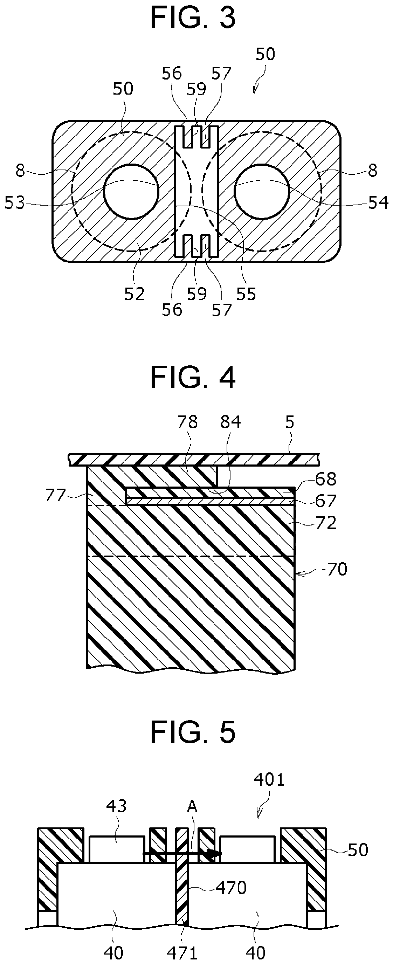

FIG. 3 is a plan view of first restraining member 50 viewed from the outside on one side in the height direction. Note here that dotted lines 8 in FIG. 3 indicate the positions of outer edges of outer covering cans 41 of batteries 40. As shown in FIG. 3, covering part 52 of first restraining member 50 is substantially rectangular planar-shaped and includes two substantially identical cylindrical holes 53 and 54. Two cylindrical holes 53 and 54 are through holes and are disposed at an interval in the longitudinal direction of covering part 52. First cylindrical hole 53 houses protruding terminal 43 including an exhaust valve of first battery 40, and is used for wire that connects the electrode of first battery 40 and a current collector plate. Second cylindrical hole 54 houses protruding terminal 43 including an exhaust valve of second battery 40, and is used for wire that connects the electrode of second battery 40 and the current collector plate. In a state in which first and second cylindrical hole 53 and 54 house corresponding protruding terminals 43 of batteries 40, first battery 40 and second battery 40 face each other at an interval in the longitudinal direction. When a battery that does not include protruding terminal 43 is used, first cylindrical hole 53 houses an exhaust valve of first battery 40, and second cylindrical hole 54 houses an exhaust valve of second battery 40.

Covering part 52 includes partition setting holes 55 disposed at an interval with respect to both of two cylindrical holes 53 and 54 in the middle part in the longitudinal direction. Partition setting hole 55 is a through hole, extends in the width direction of covering part 52, and includes a substantially rectangular planar shape. Covering part 52 includes two protruding parts 56 and 57 protruding in each of the both end parts at the middle side in the longitudinal direction of partition setting hole 55 (coinciding to the width direction of covering part 52). First protruding part 56 and second protruding part 57 are disposed at an interval in the width direction of partition setting hole 55 (coinciding to the longitudinal direction of the covering part), and a through recess 59, which is rectangular seen in a plan view, is provided between the first protruding part 56 and second protruding part 57. Through recess 59 is positioned in the middle part in the width direction of partition setting hole 55.

Note here that the first protruding part on one side in the longitudinal direction of the partition setting hole and the first protruding part on the other side in the longitudinal direction of the partition setting hole may be connected to be integrated. Furthermore, the second protruding part on the other side in the longitudinal direction of the partition setting hole and the second protruding part on the other side in the longitudinal direction of the partition setting hole may be connected to be integrated. In this way, a through-hole as rectangular in the plan view may be provided in the middle part in the width direction of the partition setting hole.

As shown in FIG. 2, the thicknesses (dimensions in the height direction) of the first and second protruding parts 56 and 57 are thinner than the thickness (dimension in the height direction) of covering part 52. Furthermore, the lower surfaces of first and second protruding parts 56 and 57 near battery 40 and the lower surface of covering part 52 near the battery are positioned on the same plane. Accordingly, above the upper surfaces of first and second protruding parts 56 and 57 in partition setting hole 55, head part housing chamber 69 having a substantially rectangular cross section is provided. As in battery block 10 shown in FIG. 3, when there are projections 56 and 57 in the gaps between the batteries 10, the positions in the height direction can be freely determined. Therefore, the lower surface of first and second protruding parts 56 and 57 near battery 40 and the lower surface of covering part 52 near the battery need not be positioned on the same plane.

Second restraining member 60 has a different structure from the first restraining member 50 in that the partition installation hole 55 does not exist. Second restraining member 60 includes annular side part 61 and covering part 62. Side part 61 is disposed to surround the ends of two batteries 40 on the other side in the height direction. Furthermore, covering part 62 extends in the orthogonal direction that is substantially orthogonal to the height direction, and covers a part of the end surface of battery 40 on the other side in the height direction. Second restraining member 60 restrains close to the bottom in the height direction of battery group 45 and prevents two batteries 40 from being separated close to the bottom in the height direction.

First cylindrical hole 63 of second restraining member 60 is a through hole and overlaps to the middle part of the bottom surface of outer covering can 41 of first battery 40 in the height direction. Also, second cylindrical hole 64 of second restraining member 60 is a through hole and overlaps to the middle part of the bottom surface of outer covering can 41 of second battery 40 in the height direction. Cylindrical holes 63 and 64 are used, for example, to electrically connect first battery 40 to second battery 40 and to electrically connect battery block 10 to battery block 10 adjacent in the height direction. In this embodiment, two batteries 40 included in battery block 10 are connected in parallel, and two battery blocks 10 adjacent in the height direction are connected in series. An example of a connection structure that enables such electrical connection will be briefly described later.

Partition member 70 includes partition part 71 that partitions two adjacent batteries 40, 40 included in battery block 10, and head part 72 connected to at least one end of partitioning part 71 in the height direction. Head part 72 is disposed at the end side including the exhaust valve of battery 40. Partitioning part 71 has a rectangular plate shape in a plan view, and head part 72 has a block structure and a rectangular parallelepiped shape. Partition member 70 has a shape substantially symmetrical with respect to a plane P that is perpendicular to the thickness direction of partitioning part 71 and that bisects partition 71. When the thickness direction of partitioning part 71 is the width direction of partition member 70, a length in the width direction of partitioning part 71 is smaller than a length in the width direction of head part 72. Accordingly, head part 72 protrudes to both sides in the thickness direction of partitioning part 71 and is thicker than partitioning part 71. Note here that head part 72 may be made to be thicker than partitioning part 71 by protruding only to one side of partitioning part 71 in the thickness direction.

Head part 72 protrudes from a position of an exhaust valve of battery 40 in the height direction of partition part 71, and includes first section 91 protruding from partitioning part 71 in the thickness direction to overlap to first battery 40 in the height direction, and second section 92 that protrudes from partitioning part 71 in the thickness direction and overlaps to second battery 40 in the height direction. Head part 72 includes top surface 73 located on one side in the height direction and bottom surface 74 located on the other side in the height direction. Each of top surface 73 and bottom surface 74 extends in an orthogonal direction substantially orthogonal to the height direction. The length in the width direction (thickness) of partitioning part 71 of partition member 70 is substantially the same as the width of through recess 59 (see FIG. 3). The shape and size of head part 72 seen in the height direction are substantially identical to the shape and size of partition setting hole 55 seen in the height direction. Partitioning part 71 of partition member 70 is inserted by press-fitting into through recess 59, and head part 72 is housed in head part housing chamber 69 until bottom surface 74 of head part 72 is brought into contact with the upper surface of first and second protruding parts 56 and 57. In this way, partition member 70 is attached to first restraining member 50.

As shown in FIG. 2, in battery block 10, first surface 81 of partition member 70 is in contact with first battery 40, and second surface 82 of partition member 70 is in contact with second battery 40. First surface 81 applies force to first battery 40 in the direction normal to first surface 81, and second surface 82 applies force to second battery 40 in the direction normal to second surface 82. Thus, each of first and second batteries 40 is sandwiched between side parts 51, 61 and partitioning parts 71, and positioned in the orthogonal direction. Tip surface 83 of partition member 70 on the side opposite to a head part 72 side is in contact with inner bottom surface 65 of second restraint member 60.

FIG. 4 is a cross-sectional view taken along the line A-A in FIG. 2, and is a cross-sectional view showing a cross section on one side in the height direction when partition member 70 is cut along the plane P. As shown in FIG. 4, partition member 70 includes height direction extending part 77 extending from head part 72 in the height direction and facing part 78 connected to an end part opposite to a head part 72 in the height direction in height direction extending portion 77 and facing head part 72 in the height direction via a gap. Head part 72, height direction extending part 77, and facing part 78 define slit 84.

Battery pack 1 further includes current collector plate 67 and sheet member 68. Current collector plate 67 is made of conductive material such as metal, and made of, for example, aluminum or nickel. At least part of current collector plate 67 is housed in slit 84. Furthermore, sheet member 68 is made of a fireproof sheet or a noncombustible sheet, such as a thermosetting resin (for example, phenol resin, unsaturated polyester resin, silicone resin, polyurethane resin, and the like) or a noncombustible material (for example, inorganic minerals, ceramics, metals, and the like). At least a part of sheet member 68 is housed between current collector plate 67 and facing part 78 in slit 84.

As shown in FIG. 2, current collecting plate 67 includes first cut-and-raised part 67a in a position that overlaps to first cylindrical hole 53 in the height direction, and first cut-and-raised part 67a presses protruding terminal 43 of first battery 40 with its elasticity to be in contact with protruding terminal 43. Furthermore, similarly, current collector plate 67 includes second cut-and-raised part 67b in a position that overlaps to second cylindrical hole 54 in the height direction, and second cut-and-raised part 67b presses protruding terminal 43 of second battery 40 with its elasticity to be in contact with protruding terminal 43.

As shown in FIGS. 1 and 2, in battery pack 1, a plurality of battery blocks 10 is disposed in a row in the height direction. As shown in FIG. 2, for two battery blocks 10 adjacent in the height direction, the bottom of outer covering can 41 of each battery 40 of one battery block is electrically connected to current collector plate 67 of other battery block 10 by bus bar 95. Furthermore, current collector plate 67 of battery block 10 located at one end in the height direction of battery pack 1 is electrically connected to one electrode of external terminal 7 (not shown in FIG. 2), thereby the bottom of outer covering can 41 of each battery 40 of battery block 10 positioned at the other end in the height direction of battery block 10 is electrically connected to the other electrode of external terminal 7 via bus bar 96 and wiring (not shown). Thus, for each battery block 10, first battery 40 and second battery 40 are connected in parallel, and a plurality of battery blocks 10 is connected in series.

Battery pack 1 includes a partition contact part that is in contact with an end part on at least one side in the height direction in partition member 70. More specifically, top surface 78a of facing part 78 forming one end at one side in the height direction of partition member 70 of battery block 10 shown at the top of FIG. 2 is in contact with the internal surface of case 5. Therefore, location 98 of case 5 that is in contact with top surface 78a serves as a partition contact part.

Furthermore, top surface 78a of facing part 78 constituting an end part at one side in the height direction of partition member 70 of battery block 10 positioned in the second position from the top in FIG. 2 is in contact with bottom surface 60a of second restraining member 60 of battery block 10 shown in the uppermost position of FIG. 2. Therefore, location 99 that is in contact with top surface 78a of facing part 78 of battery block 10 adjacent to bottom surface 60a of second restraining member 60 of battery block 10 is also a partition contact part.

As described above, battery pack 1 includes restraining members 50 and 60 including side parts 51 and 61 disposed so as to surround at least a part of the height direction of a plurality of batteries 40 arranged in alignment. Furthermore, battery pack 1 includes partition member 70 including partitioning part 71 that partitions two adjacent batteries 40 and head part 72 connected on at least one end in the height direction of partitioning part 71. Furthermore, head part 72 includes sections 91 and 92 that protrude from the position of the exhaust valve of battery 40, protrude in the thickness of partitioning part 71 and overlap to at least one of two batteries 40 in the height direction.

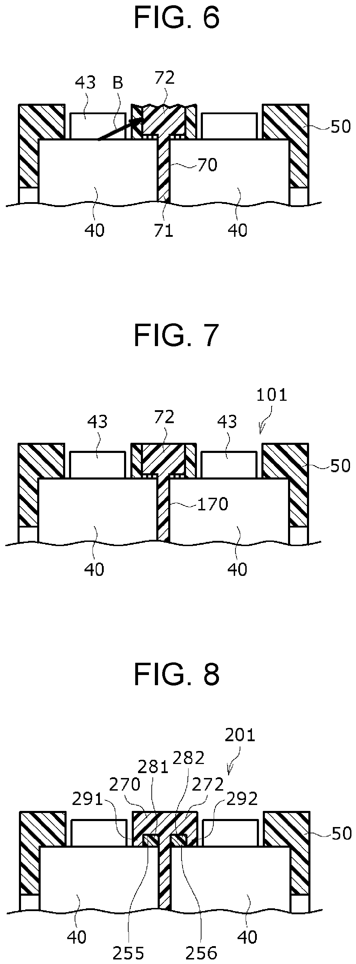

FIG. 5 is a cross-sectional view of a vicinity of protruding terminal 43 in battery pack 401 of a reference example; FIG. 6 is a cross-sectional view of a vicinity of protruding terminal 43 in battery pack 1. As shown in FIG. 5, battery pack 401 is different from battery pack 1 in that partition member 470 that partitions two adjacent batteries 40 does not include a head part but includes only plate-like partitioning part 471 and that the vicinity of protruding terminal 43 is also partitioned by plate-like partitioning part 471.

Assume that in battery pack 401 of the reference example, one battery 40 is abnormally heated and the exhaust valve operates, a part of the high-temperature gas and ejected substance is jetted from the vicinity of projecting terminal 43 toward partitioning part 471 indicated by the arrow A in FIG. 5. At this time, when the thickness of partitioning part 471 is small, a hole is formed in partitioning part 471, and the high-temperature gas or ejected substance reaches adjacent battery 40, and the abnormally heated battery 40 affects the adjacent battery. Therefore, the thickness of partitioning part 471 cannot be reduced and the size of battery pack 401 cannot be small.

On the contrary, with battery pack 1, partition member 70 includes block-shaped head part 72 that is thicker than partition part 71 on one side in the height direction of partition part 71. Therefore, even if one battery 40 is abnormally heated, and the exhaust valve is operated, high-temperature gas or ejected substance released from the vicinity of protruding terminal 43 in a direction shown by arrow B of FIG. 6 can be blocked by head part 72, reaching of the high-temperature gas or the ejected substance released from the vicinity of protruding terminal 43 to adjacent battery 40 can be efficiently suppressed.

Furthermore, since the safety can be secured by head part 72, a thickness of partition part 71 that partitions the adjacent batteries 40 can be set independently from the thickness required for head part 72, it is not necessary to increase the dimension of arrangement direction (orthogonal direction) of batteries 40, and battery pack 1 can be easily configured to be compact.

Therefore, according to battery pack 1, it is possible to simultaneously realize both working effects that are mutually opposite to each other and in trade-off relation, that is, a working effect of making it easy to shorten the distance between adjacent batteries and make battery pack 1 compact and a working effect of effectively suppressing the influence of abnormal heat generation of one battery on other batteries and making it easy to increase safety.

Furthermore, head part 72 may include first section 91 protruding to the both sides in the thickness direction of partitioning part 71 and overlapping to one of adjacent two batteries 40, 40 in the height direction, and second section 92 overlapping to the other of adjacent two batteries 40, 40 in the height direction.

According to this configuration, the dimension of head part 72 in the thickness direction of partitioning part 71 can be increased. Therefore, when one battery 40 is abnormally heated, the effect of suppressing an influence thereof on the other battery 40 can be made remarkable. Note here that a case where head part 72 includes first section 91 that overlaps to two batteries 40, 40 in the height direction and second section 92 that overlaps to the other of two batteries 40, 40 is described. However, the head part may include a part that overlaps to one of the adjacent two batteries in the height direction but may not include a part that overlaps to the other of the adjacent two batteries in the height direction.

Furthermore, partition member 70 may include height direction extension part 77 extending in the height direction from head part 72, and facing part 78 connected to an end part at the opposite to a head part 72 side in the height direction in height direction extending part 77 and facing head part 72 in the height direction with a gap sandwiched therebetween. Furthermore, head part 72, height direction extending part 77, and facing part 78 may define slit 84. Battery pack 1 may include current collector plate 67 at least a part of which is housed in slit 84.

According to this configuration, adjacent batteries 40, 40 can be easily electrically connected using current collector plate 67. Note here that in this exemplary embodiment, adjacent batteries 40, 40 are disposed in the same direction, and adjacent batteries 40, 40 are connected in parallel by current collector plate 67. However, the adjacent batteries may be disposed in the opposite direction to each other, and the adjacent batteries may be connected in series by the current collector plate.

Furthermore, battery pack 1 may include sheet member 68 that is fire-resistant, and at least a part of sheet member 68 is housed between current collector plate 67 and facing part 78 in slit 84.

According to this configuration, sheet member 68 can more effectively suppress the influence of abnormal heat generation in one battery on another battery, and battery pack 1 can be made safer. Note here that a sheet member that is fire-resistant may be absent, and only a part of the current collector plate may be housed.

Also, battery pack 1 may include a partition contact part that is in contact with at least one end of partition member 70 in the height direction.

This configuration makes it possible to prevent a gap from being generated between the tip end of partition member 70 near head part 72 and the site corresponding to the tip end. Therefore, it is possible to cut off a detour route in which high-temperature gas and ejected substances exhausted from the vicinity of protruding terminal 43 of one of batteries 40 detour above the tip of partition member 70 near head part 72 and reach adjacent battery 40. Therefore, a very safe battery pack 1 can be achieved.

Furthermore, thermal conductivity of partition member 70 is lower than thermal conductivity of restraining members 50 and 60.

According to this configuration, the heat from the abnormally heated battery 40 can be effectively radiated to the outside through restraining members 50 and 60 with high thermal conductivity. Therefore, it is possible to effectively suppress the influence of abnormally heated battery 40 on the other batteries 40.

Furthermore, battery pack 1 may include case 5 for housing restraining members 50, 60.

According to this configuration, a plurality of battery block 10 is easily housed in battery pack 1. Therefore, the voltage of battery pack 1 is easily increased, and the capacity of battery pack 1 is easily increased.

Note here that the present disclosure is not limited to the above exemplary embodiments and the modified example thereof, and various improvements and modifications are possible within the scope of the claims of the present application and their equivalents.

For example, in the above exemplary embodiments, the case where the thermal conductivity of partition member 70 is lower than the thermal conductivity of restraining members 50 and 60 has been described. However, the thermal conductivity of the partition member may be the same as the thermal conductivity of the restraint member, or may be higher than the thermal conductivity of the restraint member.

Also, the case where partition member 70 includes head part 72, height direction extending part 77, and facing part 78 has been described. However, as shown in FIG. 7, that is, as shown in a cross-sectional view of the vicinity of protruding terminal 43 of battery pack 101 of the modified example, partition member 170 may be in T-letter shape in cross section. In other words, partition member 170 may not include a height direction extending part and a facing part, and head part 72 may constitute an end part at one side in the height direction of partition member 170. Note here that FIG. 6 does not show height direction extending part 77 and facing part 78 constituting slit 84.

Furthermore, the case where battery pack 1 includes case 5 housing restraining members 50, 60 has been described, however, the restraining member may be a case.

Furthermore, the case where partition member 70 is made of the same resin material has been described. However, in the partition member, the partitioning part and the head part may be made of different materials. For example, the partition member may be formed integrally by twocolor molding. Alternatively, the partition member is integrally formed by joining the partition parts made of the same material and the head part made of a material different from that of the partition part by a joining means, for example, an adhesive, a weld part, or the like. In this case, one of the partitioning part and the head part may be made of an inorganic mineral such as mica, or a material obtained by mixing an inorganic mineral such as mica into a resin material. Alternatively, one of the partition part and the head part may be made of a thermosetting resin (for example, phenolic resin, unsaturated polyester resin, silicone resin, and the like) or ceramic fiber sheet materials.

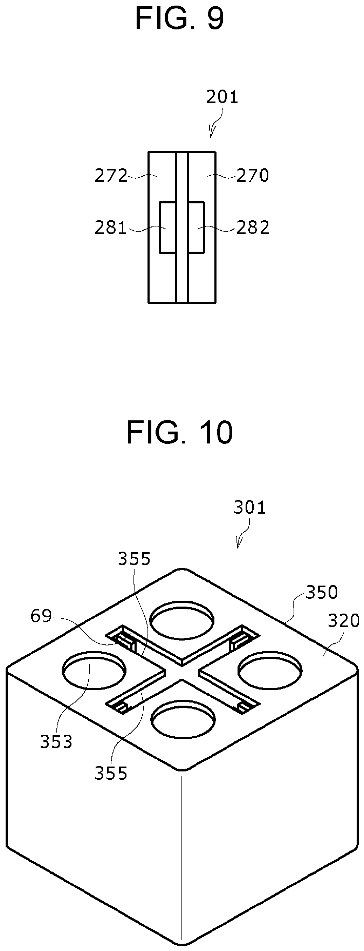

Furthermore, the partition member may be immovable relative to battery 40. FIG. 8 is a cross-sectional view of battery pack 201 of another modified example, corresponding to FIG. 7; FIG. 9 is a plan view of partition member 270 of battery pack 201 viewed from the opposite to head part 272 in the height direction. As shown in FIG. 8 and FIG. 9, head part 272 may include second recess 256 on the end surface facing battery 40 in second section 292 together with first recess 255 on the end surface facing battery 40 in first section 291. Furthermore, each of first and second recesses 255 and 256 may include fixing means 281 and 282, for example, adhesives, adhesive bonds, or adhesive sheet such as a double-sided tape. Then, first fixing means 281 is fixed to both the internal surface of first recess 255 and end surface of battery 40 and second fixing means 282 may be fixed to both the internal surface of second recess 256 and the end surface of battery 40.

This can fix partition member 270 to both of two adjacent batteries 40, prohibit partition member 270 from moving relative to each of two adjacent batteries 40, and prevent each battery 40 from rotating relatively with respect to the partition member 270. Note here that a first fixing means, for example, adhesives, adhesive bonds or adhesive sheets such as a double-sided tape, may be disposed between the first section of the head part and the end surface of the battery without providing a recess on the end surface of the first section of the head part near the battery. In addition, similarly, a second fixing means, for example, adhesives, adhesive bonds or adhesive sheets such as a double-sided tape, may be disposed between the second section of the head part and the end surface of the battery without providing a recess on the end surface of the second section of the head part near the battery. In this way, the first section may be fixed to the first battery and the second section may be fixed to the second battery.

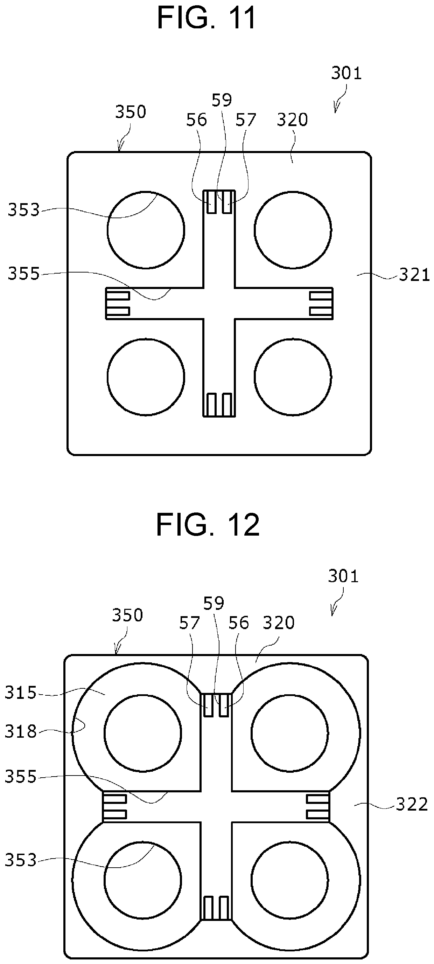

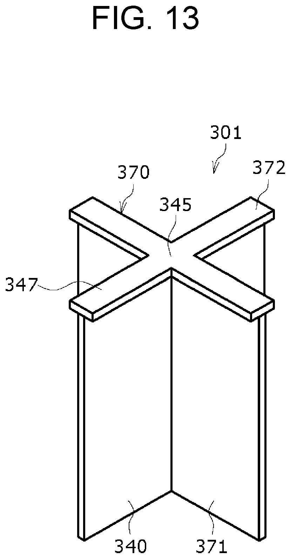

Furthermore, a case where the battery block includes two batteries arranged in alignment and two restraining members is described. However, each battery block may have three or more batteries arranged in alignment, or may have only one restraining member; FIG. 10 is a perspective view of restraining member 350 of battery pack 301 of a further modified example; FIG. 11 is a plan view of outer surface 321 of top plate part 320 of restraining member 350 of battery pack 301 when viewed in the height direction. Furthermore, FIG. 12 is a plan view of internal surface 322 of top plate part 320 of battery pack 301 when viewed in the height direction; FIG. 13 is a perspective view of partition member 370 of battery pack 301.

As shown in FIG. 10, restraining member 350 may include a substantially rectangular parallelepiped internal chamber and may have a substantially rectangular parallelepiped external appearance. As shown in FIG. 10 to FIG. 12, top plate part 320 may be provided with a plus shape (+ shape) partition setting hole 355, and each of the four end parts of partition setting hole 355 may also be provided with first protruding part 56, second protruding part 57, and through recess 59 described with reference to FIG. 3. Furthermore, top plate part 320 having a rectangular planar shape, each of four sites partitioned by plus-shaped partition setting hole 355 may be provided with cylindrical hole 353 housing protruding terminal 43 (or an exhaust valve) of battery 40. Then, a bottom plate part (not shown) may be provided with a cylindrical hole (not shown) in the vicinity of the facing position facing four cylindrical holes 353 in the height direction.

Furthermore, as shown in FIG. 12, internal surface 322 of top plate part 320 and the internal surface of the bottom plate part may be provided with recess part 315 for housing an end part of battery 40 in the height direction, and recess 315 may include battery restraining surface 318 with a shape corresponding to a part of the cylindrical outer peripheral surface of battery 40. Furthermore, as shown in FIG. 13, partition member 370 formed in an integral structure, and may include partitioning part 371 having a plus shape seen in the plan view seen in the height direction, and head part 372 having a plus shape seen in the plan view seen in the height direction. Furthermore, partitioning part 371 may include a quadrangular prism whose end surface shape is a square and four plate-like parts 340 radially extending from each side face of the quadrangular prism at an interval of 90 degrees. Furthermore, head part 372 may include first plate-shaped part 345 whose end surface shape is a square and four second plate-shaped parts 347 radially extending from each side surface of first plate-shaped portion 345 at an interval of 90 degrees.

Furthermore, one side end in the height direction of second plate-like part 347 of head part 372 and one side-end in the height direction of plate-like part 340 of partitioning part 371 may be linked to each other. Furthermore, second plate-like part 347 of head part 372 and plate-like part 340 of partitioning part 371, which form a pair, may be constructed in the same structure as the integral structure of head part 72 and partitioning part 71 which are described above with reference to FIGs. 2 and 3. That is, second plate-like part 347 of head part 372 may have a part protruding to the both sides in the thickness direction of plate-like part 340 of partitioning part 371. Furthermore, each plate-like part 340 of partitioning part 371 is press-fitted into through recess 59 until the bottom surface of head part 372 is brought into contact with first and second protruding parts 56 and 57, and each second plate-like part 347 of head part 372 may be housed in each head part housing chamber 69 (see FIG. 10). In this way, a battery block including four batteries 40 arranged in alignment in two rows and two columns can be constructed.

Furthermore, positions of the adjacent batteries may be different from each other in the height direction. For example, when adjacent batteries are disposed in a staggered manner, the protruding terminal of one battery may protrude in the height direction from the bottom of the outer covering can of the other battery at both ends. Also, as shown in FIG. 2, the case where all top surfaces 73 of head part 72 in the height direction and all bottom surfaces 74 of head part 72 are substantially parallel has been described, but the configuration may not be the case. Any shape and structure may be employed as long as the head part of the partition member protrudes in the height direction from the position of the exhaust valve of the battery and includes a portion that protrudes in the thickness direction of the partition portion and overlaps to at least one of the two batteries in the height direction.

Furthermore, the case where partition member 70 has head part 72 near protruding terminal 43 in battery 40 in the height direction has been described. However, the partition member may include a head part on the side opposite to the protruding terminal of the battery in the height direction of the partition part. The battery may have an exhaust valve at the bottom of the outer covering can. In such a case, when this structure is employed, it is possible to effectively suppress reaching of high-temperature gas and ejected substances exhausted from the bottom part of the outer covering can to the adjacent battery. Alternatively, the partition member may include head parts on both sides of the partitioning part in the height direction. A battery may include exhaust valves at two locations, that is, a sealing body and the bottom part of the outer covering can. In such a case, when this structure is employed, it is possible to effectively suppress reaching of high-temperature gas and ejected substances released from the sealing member and the bottom of the outer covering can to the adjacent battery.

### REFERENCE MARKS IN THE DRAWINGS

1, 101, 201, 301, 401 battery pack, 5 case, 10 battery block, 40 battery, 50 first restraining member, 51 side part, 60 second restraining member, 61 side part, 67 current collector plate, 68 sheet member, 70, 170, 270, 370, 470 partition member, 71, 371, 471 partitioning part, 72, 272, 372 head part, 77 height direction extending part, 78 facing part, 84 slit, 91, 291 first section, 92, 292 second section, 98, 99 partition contact part, 281 first fixing means, 282 second fixing means, 350 restraining member

## Claims

1. A battery pack comprising:
a restraining member including a side part surrounding at least a part in a height direction of a plurality of batteries arranged in alignment; and
a partition member including
a partitioning part for partitioning two adjacent batteries of the plurality of batteries, and
a head part coupled to in at least a first end in the height direction of the partitioning part,
wherein the head part protrudes in the height direction from a position of an exhaust valve of one battery of the plurality of batteries, protrudes in a thickness of the partitioning part to include an overlapping part in at least one of the two batteries in the height direction.

2. The battery pack according to claim 1, wherein the head part protrudes to both sides in thickness of the partitioning part, and includes a first section overlapping to a first battery of the two batteries in the height direction and a second section overlapping to a second battery of the two batteries in the height direction.

3. The battery pack according to claim 1 or 2, wherein the partition member includes a height direction extending part being elongated in the height direction from the head part, and a facing part connected to an end part opposite to the head part in the height direction in the height direction extending part and facing the head part in the height direction via a gap, wherein the head part, the height direction extending part, and the facing part define a slit,
the battery pack comprising a current collector plate at least a part of which is housed in the slit.

4. The battery pack according to claim 3, comprising a sheet member with a fire-resistant property, wherein at least a part of the sheet member is housed between the current collector plate and the facing part in the slit.

5. The battery pack according to any one of claims 1 to 4, comprising a partition contact part that is in contact with at least end part in the partition member in the height direction.

6. The battery pack according to any one of claims 1 to 5, wherein a thermal conductivity of the partition member is lower than a thermal conductivity of the restraining member.

7. The battery pack according to any one of claims 2 to 6, comprising:
a first fixing means disposed between the first section and the first battery of the two batteries, and
a second fixing means disposed between the second section and the second battery of the two batteries.

8. The battery pack according to any one of claims 1 to 7, comprising a case for housing the restraining member.

9. The battery pack according to any one of claims 1 to 7, wherein the restraining member constitutes a case.
